Europäisches Patentamt

European Patent Office

Office européen des brevets

(11) Publication number: **0 138 326**
**A1**

# (12) EUROPEAN PATENT APPLICATION

(21) Application number: **84305585.6**

(22) Date of filing: **17.08.84**

(51) Int. Cl.⁴: **C 03 C 27/10**, G 02 B 6/24, B 65 H 69/02, C 09 J 3/14

(30) Priority: **19.08.83 US 524959**

(43) Date of publication of application: **24.04.85 Bulletin 85/17**

(84) Designated Contracting States: **AT BE CH DE FR GB IT LI NL SE**

(71) Applicant: **RAYCHEM CORPORATION, 300 Constitution Drive, Menlo Park California 94025 (US)**

(72) Inventor: **Jaraczewski, Kathleen Adair, 505 Cypress Point Drive Nbr. 41, Mountain View California 94043 (US)**
Inventor: **Myers, David R., 831 North El Camino Real Nbr. 4, San Mateo California 94401 (US)**

(74) Representative: **Benson, John Everett et al, Raychem Limited Intellectual Property Law Department Swan House 37-39, High Holborn, London WC1 (GB)**

(54) **Method & composition for joining optical fibres.**

(57) Polyfunctional acrtylate or methacrylate adhesive compositions providing optical fiber splices which maintain acceptable coupling efficiency under temperature and humidity conditions encountered in commercial use. Novel compositions comprising polyfunctional acrylate or methacrylate monomers having 3 to 7 acrylate or methacrylate groups and a vinyl monomer are used as optical adhesives. The adhesive compositions are preferably photo cured.

EP 0 138 326 A1

DAVID R. MYERS

KATHLEEN A. JARACZESKI

## METHOD AND COMPOSITION FOR JOINING OPTICAL FIBERS

### Background of the Invention

This invention is in the field of joining or splicing optical fibers together. There are numerous methods, devices and techniques that have been used for splicing optical fibers to obtain the maximum optical coupling efficiency between the ends of the two fibers being joined together. Among the devices that have been used are groved plates in which the optical fibers are placed to align the fibers. The plates holding the optical fibers are then connected mechanically to align the fibers. Tubes have been used by inserting the ends of the fibers into the tube then joining the fibers. Machines have also been used to mechanically align and hold the fibers in proper position until they can be joined.

The conventional methods used for joining or splicing optical fibers include fusion of the fibers and joining the fibers with of adhesive compositions. The adhesive compositions which have been used to join optical fibers together have been catalitically cured compositions, photo cured compositions, thermoset compositions and thermoplastic compositions.

All of the devices, methods and compositions conventionally used to splice optical fibers have the common objective of obtaining the maximum optical coupling efficiency between the optical fibers being joined together. The conventional criteria for such splicing has been for refractive index matching not only the optical fibers being joined together but between the optical fibers and any adhesive or other coating composition that is used to assist in the splice.

It is generally recognized that for an optical fiber splice to be acceptable, there should be no more than 0.3 db attenuation in the light being transmitted between the optical fibers joined together.

General Description of the Invention

This invention is directed to adhesive compositions for joining or splicing optical fibers which will withstand conditions encountered in commercial field use where the compositions are used. This invention is also directed to methods and adhesive compositions which provide an optical fiber splice which will withstand the conditions encountered in commercial use. The mere matching of refractive index and obtaining the maximum optical coupling efficiency of an optical fiber splice under controlled conditions is not sufficient for the conditions encountered in commercial use. The conditions encountered in commercial installations of optical fiber cables, whether in underground or aerial applications, involve constant temperature cycling as well as high humidity conditions. Other installations will involve fairly constant temperatures, which are sometimes elevated temperatures.

The methods and adhesive compositions of this invention provide optical fiber splices which will maintain an acceptable optical coupling efficiency through one or more of the following three tests. The first test involves subjecting the optical fiber splice to temperature cycles of from about -30°C to about 60°C. The optical coupling efficiency is monitored continuously during this test because in field conditions the optical fiber will be in constant use during changes in temperature. The desired optical coupling efficiency is maintained through this temperature range when cycled from ambient temperature to the extremes of this temperature range and back to ambient temperature for three of these full temperature cycles in 24 hours through at least ten cycles. Thus, this invention provides the adhesive composition and means for maintaining the acceptable coupling efficiency of the optical fiber splice through the temperature extremes encountered in commercial installations of optical fiber cables.

The second test reflects conditions of high relative humidity which is frequently encountered in commercial installations of optical fiber cables. The methods and adhesive compositions of this invention provide means of maintaining acceptable coupling efficiency of the optical fiber splice at 95% relative humidity at 40°C for at least 10 days.

-4-

The third test reflects the conditions of sustained elevated temperatures which is frequently encountered in commercial installations of optical fiber cables. The methods and adhesive compositions of this invention enable a splice in an optical fiber to maintain acceptable coupling efficiency at a temperature of 70°C for at least seven days.

Other properties which are essential for commercial use of optical fiber splicing methods and compositions include the requirement that the composition used to join the ends of the optical fiber have sufficient shelf life at temperatures and conditions encountered during manufacture, storage, shipping, storage in the field (frequently in a service truck), handling and final use. The adhesive compositions of this invention also provide the desired viscosity for handling and alignment of the optical fibers, The desired ease of use, including curing or setting time, for the composition for efficient field use are also provided by the adhesive compositions and methods of this invention. The compositions of this invention remain stable and usable when stored at 60°C for three months. This is an indication that the compositions will be usable under ordinary commercial conditions for about one year or more.

-5-

The viscosity of the composition is one of the more critical properties which is satisfied by the adhesive compositions of this invention. If the viscosity is too low, the physical shock during handling of the compositions before they are used will form bubbles in the composition. The bubbles will then interfere with obtaining the maximum efficiency of the optical fiber coupling. In addition, one of the preferred methods of using the compositions of this invention is to place the composition in a tube suitable for receiving the ends of the optical fibers to be spliced. The adhesive composition is stored in the tube until ready for use then used by inserting the ends of the optical fibers into the tube. If the viscosity is too low, the adhesive will not remain in the tube and bubbles may be induced into the composition during handling. If the viscosity is too high it is difficult to align the optical fibers properly before the composition is cured. The compositions of this invention provide appropriate viscosities between about 200 centipoise and about 5,000 centipoise. The adhesive compositions of this invention have viscosities within this acceptable range at the temperatures encountered in the commercial use of these compositions in the field.

-6-

The adhesive compositions of this invention provide the cure times and convenience of use normally desired for commercial installation. The adhesive compositions of this invention are preferably used with a conventional photo-initiator which is compatible with the compositions and cured by radiation with conventional active light sources. In this method the composition is generally cured under about two minutes and most cure under about one minute with the use of a low pressure mercury vapor lamp, such as one having an output of $10 \times 10^{-3}$ milliwatts per $cm^2$, or a xenon arc lamp, which provide the required UV radiation.

Another property the adhesive compositions of this invention have which contributes to the function of these adhesive compositions in maintaining the maximum coupling efficiency between the optical fibers is shrinkage of less than 20% and typically a shrinkage of about 10% or less. In connection with the shrinkage the adhesive compositions of this invention exhibit good release from other substrates, such as the walls of the tubes referred to above, particularly if a release coating is placed on the walls of the tube holding the composition.

## Specific description of the Invention

The method provided by this invention for joining or splicing optical fibers comprises aligning the ends of the fibers to be joined, applying to the fiber ends an adhesive composition comprising a polyfunctional acrylate or methacrylate monomer having three to seven acrylate or methacrylate groups and curing the polyfunctional monomer to bond the fiber ends in fixed relationship to each other. The polyfunctional monomers useful in the method of this invention have from three to seven acrylate or methacrylate groups appended to a backbone having 3 to 30 carbon atoms. The backbone of the monomer may be straight or branched chain alkyl, straight or branched chain oxyalkyl, aryl, hetrocyclic nitrogen ring or combinations thereof. Examples of these polyfunctional monomers are trimethylolpropanetriacrylate, pentaerythritoltetraacrylate, dipentaerythritolmonohydroxypentaacrylate, dipentaerythitolhexacrylate, tris (2-hydroixyethyl) isocynanurate, trimethylolpropanetrimethacrylate and pentaerythritoltrimethacrylate.

Preferred adhesive compositions of this invention which provide the desired performance for commercial splicing or joining of optical fibers comprise the combination of a polyfunctional acrylate or methacrylate monomer described above and a coreactive vinyl monomer having one to three groups of formula $- CR=CH_2$ where R is $-H$ or $-CH_3$, wherein the weight ratio of polyfunctional acrylate or methacrylate monomer to coreactive vinyl monomer is between about 3:2 and about 9:1, respectively, and preferably between about 8.5:1.5 and about 7:3, provided that the polyfunctional acrylate or methacrylate monomer has one more acrylate or methacrylate group per molecule than the coreactive vinyl monomer. The coreactive vinyl monomer useful in the adhesive composition of this invention have from 1 to 3 vinyl groups and from 3 to about 25 carbon atoms. Examples of such coreactive vinyl monomers are triethylene glyucol diacrylate, triethylene glycol dimethacrylate, 1,6-hexanediol diacrylate, trimethylolpropanetriacrylate, N-vinyl pyrrolidone, methylmethacrylate, and ethoxylated bisphenol-A diacrylate.

The adhesive compositions of this invention generally preferred to satisfy the commercial use requirement described above comprise a tri or tetra acrylate or methacrylate monomer in combination with a dicarylate or dimethacrylate monomer in a weight ratio of between about 3:2 and about 9:1, respectively, with the preferred weight ration being between about 8.5:1.5 and about 7:3.

The adhesive compositions of this invention may be cured by heat, by use of catalysts, or by incorporating a photo-initiator and applying appropriate light. The heat curing is sometimes slower than desired in commercial use. The catalytic curing usually is not convenient in that it requires mixing the catalyst with the adhesive composition just before use.

The preferred way of curing the adhesive compositions this invention is by incorporating a photo-initiator and curing with actinic light. Photo-initiators of the type useful in this invention are those which are compatible with the compositions of this invention and include the benzoin ether type, such as benzoin methyl ether or benzoin isopropyl ether, substituted benzoin ethers such as anisoin methyl ether, substituted acetophenones such as 2,2-diethoxyacetophenone, or 2,2-dimethoxy -2-phenylacetophenone, and substituted alpha-ketols such as 2-methyl-2-hydroxipropiophenone, isobutyl benzoin ether, 2-hydroxy-2-methyl-1-phenyl propan-1-one, isopropryl benzoin ether, benzoin ethyl ether, benzoin methyl ether, benzil, hydroxy cyclohexyl phenyl ketone, isopropyl thioxanthone, chlorine functional substituted benzophenone (Acetocure X-500), halogen substituted alkyl-alkylketone (Sandoray 1000). The photo-initiators are normally used in amounts from about 0.01 to 5.0, and more usually, 1 to 3 parts per hundred parts by weight of the adhesive composition of this invention.

Preferred embodiments of the adhesive compositions of this invention include the following: ·

1.  Trimethylpropane triacrylate and triethylene glycol diacrylate in a weight ratio of about 4:1 together with a photo-initiator, Darocur 1173, which is an acetophenone derivative commercially available from EM Chemical.  The photo-initiator is present in the amount of about 3 parts per 100 parts of diacrylate/triacrylate compositions.

2.  Pentaerythertoltetraacrylate and triethylene glycol diacrylate in a weight ratio of about 9:1 with about 3 parts of the above Darocur 1173.

3.  Trimethylpropanetriacrylate and 1,6-hexanediol dimethacrylate in a weight ratio of about 4:1 with about 3 parts of the above Darocur 1173.

Preferred polyfunctional acrylate or methacrylate monomers useful in the method of this invention are:

1.  Pentaerythertoltetraacrylate with about 3 parts of the above Darocur 1173.

2.  Trimethylolpropanetriacrylate with about 3 parts of the above Darocur 1173.

The preferred method of using the adhesive compositions of this invention is in a tube such as illustrated in US Patent 4,057,448 or in copending US Patent Application Serial Number 06/465,392 filed February 10, 1983. In this method of use the adhesive composition is placed in the center part of the tube with air spaces at either end of the tube. The tube is then taped closed for storage, transportation and handling. At the time of use the tape is removed from the ends of the tube, the optical fibers are inserted in the tube and aligned. The adhesive composition is cured by radiation with actinic light. It is further preferred that a zone curing technique be used to focus the light to first cure the adhesive composition at the center portion of the tube where the ends of the optical fibers are aligned, then cure the remaining portion of the adhesive composition extending in each direction from the center portion of the tube, thereby curing the remaining adhesive composition around the optical fibers.

-11-

Examples

In the following examples the following composition was used:

1.86 grams triethylene glycol diacrylate
8.15 grams trimethypropane triacrylate
0.3  grams Darocur 1173  (available from EM Chemical)

This composition was prepared by mixing the three components listed above at room temperature for 1 minute.

The above composition was then placed in an hour glass shaped tube having a center internal diameter of 500 microns which center section is 3.20 mm in length with the larger ends of the tube being 2.50 mm internal diameter and each end being 4.5 mm in length.  In each tube 8 to 9 microliters of the above composition was placed in the center of the tube and graded index optical fibers having the specifications of 125 micron O.D. with 50 micron core were then inserted into each end of the tube, aligned by optical-electronic means and the composition then cured using a low pressure mercury vapor lamp.  The lamp was hand held and radiated the center part of the tube by using a shutter to shield the remaining part of the tube from the light source.  After 1 minute the shutter was removed and the entire tube was then radiated with the lamp for 1 minute.  Eleven specimen splices prepared in this manner were then subjected to the tests described below.

-12-

The adhesive composition described above had a viscosity of 75-80 cps at 20° centigrade. Properties indicate that the shelf life would be in excess of 1 year at 25° centrigrate. The tubes used in this test had no release coating on the interior surface.

Temperature Cycling Testing

Six of the above prepared optical fiber splices were subjected to temperature cycling test from ambient temperature to -30°C to ambient temperature to +60°C and back to ambient temperature. The cycle rate was three complete cycles per 24 hours. The coupling efficiency of the splice was measured continously during the cycles in terms of maximum deviation during the tests above.

In each of the following samples the maximum deviation was recorded during the first 12 hours of cycling and the maximum deviation recorded afetr the first 12 hours of cycling:

| Sample | £ of Cycles | Max. Deviation During first 12 hours (dB) | Max Deviation After 12 hours (dB) |
|---|---|---|---|
| 1 | 6 | .10 | .08 |
| 2 | 11 | .25 | .14 |
| 3 | 2.5 | .06 | .06 |
| 4 | 2.5 | .41 | .08 |
| 5 | 6 | .04 | .08 |
| 6 | 6 | .03 | .10 |

Relative Humidity Test

Three of the samples were subjected to 95% relative humidity at 40°C. During the test the attenuation in the coupling efficiency of the fiber optic splice was measured continuously and the maximum deviation in decibles recorded. In addition the average deviation during the test was recorded in decibles.

| Sample | Length of Test in Days | Max. Deviation (dB) | Avg. Deviation (dB) |
|--------|------------------------|---------------------|---------------------|
| 7      | 4.5                    | .18                 | .04                 |
| 8      | 3.5                    | .14                 | .04                 |
| 9      | 10                     | .25                 | -                   |

Heat Aging Test

Two of the sample fiber optic splices prepared above were subjected to a heat aging test at a constant temperature of 70°° and the attenuation in optical fiber coupling efficiency was recorded in decibles as well as the average deviation in decibles during the test.

| Sample | Length of Test in Hours | Max. Deviation (dB) | Ave. Deviation (dB) |
|--------|-------------------------|---------------------|---------------------|
| 10     | 65                      | .21                 | .14                 |
| 11     | 240                     | .06                 | -                   |

We claim:

1.    A method of joining optical fibers comprising aligning the ends of the fibers to be joined, applying to the fiber ends an adhesive composition which, when cured, maintains acceptable coupling efficiency between the optical fibers through temperature cycles from -30°C to 60°C.

2.    A method of joining optical fibers comprising aligning the ends of the fibers to be joined, applying to the fiber ends an adhesive composition which, when cured, maintains acceptable coupling efficiency between the optical fibers at a relative humidity of 95% at 40°C.

3.    A method of joining optical fibers comprising aligning the ends of the fibers to be joined, applying to the fiber ends an adhesive composition which, when cured, maintains acceptable coupling efficiency between the optical fibers at a temperature of 70°C.

4.    The method of Claim 1 wherein the adhesive composition when cured maintains said acceptable coupling efficiency through 3 cycles in 24 hours.

5.    The method of Claim 4 wherein the adhesive composition when cured maintains said acceptable coupling efficiency through 10 temperature cycles.

6.    The method of Claim 2 wherein the adhesive composition when cured maintains said acceptable coupling efficiency for 10 days.

7.    The method of Claim 3 wherein the adhesive composition when cured maintains said acceptable coupling efficiency for 7 days.

8.    A method of joining optical fiber comprising aligning the ends of the optical fibers to be joined, applying to the ends of the optical fibers an adhesive composition comprising a polyfunctional acrylate or methacrylate monomer having 3 to 7 acrylic or methacrtylic groups appended to a backbone having 3 to 30 carbon atoms, and curing the adhesive composition.

9.    The method of Claim 8 wherein the adhesive composition comprises trimethylolpropanetriacrylate.

10.    The method of Claim 9 wherein the adhesive composition comprises pentaerythritoltetraacrylate.

11.    The method of Claim 8 wherein the adhesive composition is comprises dipentaerythritolhexacrylate.

12.    The method of Claim 8 wherein the adhesive composition contains a photoi-nitiator and the curing is by irradiating with actinic light.

13.    A composition comprising a polyfunctional acrylate or methacrylate monomer having 3 to 7 acrylate or methacrylate groups appended to a backbone having 3 to 30 carbon atoms and a coreactive vinyl monomer having 1 to 3 groups of the formula $- CR=CH_2$ wherein R is $-H$ or $-CH_3$ in a weight ratio of between about 3:2 and about 9:1, respectively, wherein the polyfunctional acrylate or methacrylate monomer has 1 more acrylate or methacrylate group per molecule than the coreactive vinyl monomer.

14.   The composition of Claim 13 wherein the weight ratio is between about 8.5:1.5 and about 7:3.

15.   The composition of Claim 13 wherein the polyfunctional acrylate or methacrylate monomer is a triacrylate or trimethacrylate and the coreactive vinyl monomer is a diacrylate or dimethacrylate.

16.   The composition of Claim 14 wherein the polyfunctional acrylate or methacrylate monomer is a triacrylate or trimethacrylate and the coreactive vinyl monomer is a diacrylate or dimethacrylate.

17.   The composition of Claim 13 wherein the polyfunctional acrylate or methacrylate monomer is trimethyholpropanetri-acrylate and the coreactive vinyl monomer is triethylene-glycoldiacrylate.

18.   The composition of Claim 13 wherein the composition contains an effective amount of a photo-initiator.

19.   A photoactive mixture comprising a polyfunctional acrylate or methacrylate monomer having 3 to 7 acrylate or methacrylate groups appended to a backbone having 3 to 30 carbon atoms, a coreactive vinyl monomer having 1 to 3 groups of the formula $-CR=CH_2$ wherein R is -H or $-CH_3$ in a weight ratio of between about 3:2 and about 9:1, respectively, wherein the polyfunctional acrylate or methacrylate monomer has 1 more acrylate or methacrylate group per molecule than the coreactive vinyl monomer, and a photo-initiator.

20. The photoactive mixture of Claim 19 wherein the weight ratio is between about 8.5:1.5 and about 7:3.

21. The photoactive mixture of Claim 19 wherein the polyfunctional acrylate or methacrylate monomer is a criacrylate or trimethacrylate and the coreactive vinyl monomer is a diacrylate or dimethacrylate.

22. The photoactive mixture of claim 21 wherein the diacrylate is trimethyleneglycoldiacrylate and the triacrylate is trimethylolpropanetriacrylate.

23. An article comprising a tube suitable for receiving the ends of optical fibers for joining, containing a composition comprising a diacrylate and a triacrylate in weight ratio of diacrylate to triacrylate between about 2:3 and about 1:9, respectively.

24. The article of Claim 23 wherein the tube comprises a release coating on the surface of the tube in contact with the composition or a surface with inherent release properties.

25. The article of claim 23 wherein the composition contains a photo-initiator.

26. The article of claim 23 wherein the weight ratio is between about 1.5:8.5 and about 3:7.

27. Optical fibers joined together with cured adhesive composition of claim 13.

0138326

**European Patent Office**

**EUROPEAN SEARCH REPORT**

. Application number

| | DOCUMENTS CONSIDERED TO BE RELEVANT | | EP 84305585.6 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | US – A – 3 989 567 (TARDY)<br>* Claim 1; column 3, line 56 – column 4, line 19; fig. 1,2 *<br>–– | 1 | C 03 C 27/10<br>G 02 B 6/24<br>B 65 H 69/02<br>C 09 J 3/14 |
| X | US – A – 3 810 802 (BUHITE)<br>* Claims; column 2, lines 50-72; fig. *<br>–– | 1,8,23 | |
| A | DE – A1 – 2 802 360 (GEMERT)<br>* Claims 1,3,4 *<br>–– | 13,19 | |
| A | DE – A1 – 2 547 509 (MPB CORP.)<br>* Claims 1-3,6 *<br>–––– | 13,19 | |
| | | | **TECHNICAL FIELDS SEARCHED (Int. Cl.4)** |
| | | | C 03 C<br>C 03 B<br>G 02 B<br>B 65 H<br>C 09 J |

| The present search report has been drawn up for all claims | | |
|---|---|---|
| Place of search<br>VIENNA | Date of completion of the search<br>20-11-1984 | Examiner<br>HAUSWIRTH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82